(19) Europäisches Patentamt / European Patent Office / Office européen des brevets

(11) EP 4 019 126 A1

(12) # EUROPEAN PATENT APPLICATION

(43) Date of publication:
**29.06.2022 Bulletin 2022/26**

(21) Application number: **20216627.8**

(22) Date of filing: **22.12.2020**

(51) International Patent Classification (IPC):
***B01J 20/32*** *(2006.01)* ***B01J 41/13*** *(2017.01)*
***B01J 41/20*** *(2006.01)*

(52) Cooperative Patent Classification (CPC):
**B01J 20/328; B01J 20/3208; B01J 20/3219; B01J 20/3282; B01J 41/13; B01J 41/20**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **METROHM AG**
**9100 Herisau (CH)**

(72) Inventors:
- **Zatirakha, Alexandra**
  **121108 Moscow (RU)**
- **Aeschlimann, Andrea**
  **9100 Herisau (CH)**
- **Brand, Bastian**
  **9100 Herisau (CH)**

(74) Representative: **Hepp Wenger Ryffel AG**
**Friedtalweg 5**
**9500 Wil (CH)**

(54) **METHOD FOR MODIFYING A POLYMER SUPPORT MATERIAL, POLYMER SUPPORT MATERIAL OBTAINABLE BY SUCH METHOD, CHROMATOGRAPHY COLUMN, METHOD OF CHROMATOGRAPHIC SEPARATION AND USE OF A POLYMER SUPPORT MATERIAL**

(57) The present invention refers to a Method for modifying a support material, in particular a polymeric support material, for use as a stationary phase in an analytical or preparative separation process. The method comprises the steps of providing a support material, coating said support material with an oligoamine or polyamine and reacting the support material with a compound comprising a first functional group reactive with amines and/or hydroxy group and an ion-exchange group. The invention also refers to a support material, a chromatography column, a method of chromatographic separation of analytes and the use of such support material.

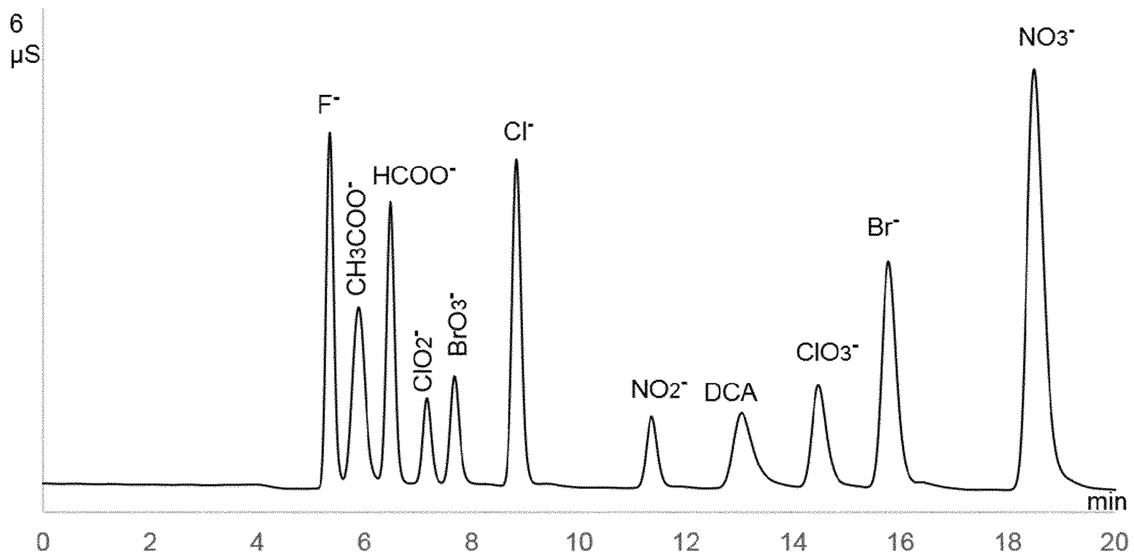


Fig 4

EP 4 019 126 A1

## Description

The present invention relates to a method for modifying a polymer support material for use as a stationary phase in an analytical or preparative separation process. The invention further relates to a polymer support material obtainable by such method. The invention further relates to a chromatography column filled with polymer support material, a method of chromatic se>paration of analytes and the use of such polymer support material for the separation of analytes, in particular for use in anion exchange chromatography, cation exchange chromatography and/or HILIC chromatography.

Ion exchangers are usually made of particulate materials, which carry charges on their surface that enable them to retain ions. Anion exchangers are often based on cationic ammonium compounds, although phosphonium and arsonium ions are also known. For purely electrostatic interactions, the retention time is determined by Coulomb's law. Accordingly, only the charge of the anion should affect the retention time of the latter. However, when ion chromatography is performed in aqueous solution, other factors affect the retention behavior, such as the hydration of the anion and the hydration of the exchange group. The polarizabil-ity of the ions involved and weaker secondary interactions between the analytes and the exchange substrate also play a role.

Carbonate and hydroxide solutions are the most common eluents used in suppressed anion-exchange chromatography, however, within the last decade the trend was shifting more and more toward the development of hydroxide-selective anion-exchange columns.

The advantage of hydroxide eluent over carbonate eluent is as follows: possibility to use gradient elution for the simultaneous separation of weakly and strongly retained compounds, lower background conductivity and thus higher sensitivity of analysis. Another advantage is that hydroxide eluent provides good resolution of fluoride from void volume, which is often a problem when using carbonate eluent. Also some norms for monitoring disinfection by-products in water recommend hydroxide eluent.

Columns for the use in suppressed IC mode with hydroxide eluent should be stable at high pH up to 14, which is usually provided by using aromatic substrates such as DVB-based copolymers, and possess high surface hydrophilicity provided by the respective anion-exchange coating, which increases elution power of hydroxide ion and column efficiency for highly polarizable anions such as nitrate, iodide, perchlorate etc.

A packing material based on aromatic copolymer with hydrophilic anion-exchange coating is disclosed in Analytica Chimica Acta, 964, (2017) 187. This reference describes the PS-DVB-based anion exchanger, where the anion-exchange coating bonded to the substrate through 1,4-butanediol diglycidyl ether as a linker is formed by attaching polyethyleneimine and crosslinking and quaternizing it by reacting with 1,4-butanediol diglycidyl ether. Such material possesses rather good selectivity for the separation of standard inorganic anions and some organic acids, but capacity of the resin is defined by the crosslinking degree of polyethyleneimine with 1,4-butanediol diglycidyl ether and, therefore, cannot be adjusted independently from column selectivity in the proposed preparation method.

Very similar packing material with polyethyleneimine-based coating is disclosed in WO 2020/044813A1, where polyethyleneimine coated substrate is subsequently reacted with diglycidyl ether and tertiary amine. However, in the proposed approach desired functionalities are only formed when certain ratios of polyethyleneimine and diglycidyl ether are used, and crosslinking is highly probable under the described reaction conditions. This affects selectivity and creates additional capacity because of unavoidable quaternization of amino groups in polyethyleneimine, therefore, selectivity and capacity cannot be varied independently. Also, early elution of divalent sulfate on the reported packing material under the optimized testing conditions may cause problems with quantification of neighboring analytes (for example, $ClO_3$ and $NO_2$) that are present in much lower quantities in real samples.

Another way to prepare hydrophilic coatings for aromatic substrates to be used with hydroxide eluent in suppressed ion chromatography is proposed in Journal of Chromatography A 1213 (2008) 37 and US 2005/0181224A1 and includes step-by-step growth of positively charged hyperbranched layer on the surface of sulfonated EVB-DVB by repeating the modification cycles including reactions with primary amines and diglycidyl ethers. The prepared materials possess good selectivity and high capacity, which can be increased by increasing the number of modification cycles (branching degree). However, increasing the number of cycles leads not only to capacity, but also to selectivity change due to the fact that crosslinking process becomes more likely. Therefore, those parameters cannot be controlled independently from each other. Also, preparation of such coatings providing good selectivity includes many synthesis steps (usually, more than 8), which makes the reproducibility of the coating more difficult.

Efforts have been made to provide particularly stable support particles, preferably support particles having a hydrophobic core which can be (surface-)modified to achieve certain desirable properties in separation processes. For example, PCT/EP2020/059908 teaches a modified support material for use in separation methods having adjustable hydrophilicity, balanced capacity, high number of theoretical plates, chemical inertness and high mechanical stability. The modified support material according to the said publication works well for ion chromatography separations using carbonate eluents, while the use of hydroxide eluent results in co-elutions of some pairs of analytes that are well resolved with carbonate, which limits the applicability of such material for solving key analytical tasks in industry.

It is an object of the present invention to overcome the disadvantages in the state of the art. In particular, it is an object of the present invention to provide a polymer support material modified such that the hydrophilicity of the material can be adjusted independently of the oxygen content in the polymer core substrate, resulting in a mechanically stable and robust particle, while providing well reproducible properties from one batch to the other. Furthermore, an ion exchanger based on the polymer support material should be provided which is chemically largely inert and wherein hydrophilicity, capacity and selectivity can be configured independently of each other.

The object is achieved by a modification method, a polymer support material, a chromatography column, a separation method and the use of a polymer support material having the features of the independent claims. However, the applicability of the present invention is not limited to the hydroxide eluent only.

A first aspect of the invention refers to a method for modifying a support material, in particular a polymer support material for use as a stationary phase in an analytical or preparative separation process. The method comprises the steps of:

a) providing a support material,
b) coating the support material with an oligoamine or polyamine,and
c) reacting the support material with a compound comprising a first functional group reactive with amines and/or hydroxy groups, preferably an epoxy group, and an ion-exchange group, preferably a quaternary organo-element of main group V, preferably a quaternary ammonium group.

Steps b) and c) are performed in sequence or simultaneously. Regarding the simultaneous performance, the support material is mixed with the oligoamine or polyamine and with a compound comprising a first functional group reactive with amines and/or hydroxy groups, preferably an epoxy group, and an ion-exchange group, preferably a quaternary organo-element of main group V, preferably a quaternary ammonium group in one step. Alternatively, the oligoamine or polyamine and the compound comprising the first functional group reactive with amines and/or hydroxy groups, preferably an epoxy group, and an ion-exchange group, preferably a quaternary organo-element of main group V, preferably a quaternary ammonium group, are mixed in a first step and the support material is added to that mixture in a second step.

The coating in step b) can be a covalent or electrostatic coating.

The support material provided in step a) is preferably coated with a polyamine selected from the group consisting of polyallylamine, linear or branched polyethyleneimine (PEI), poly(2-methylaziridine); preferably a branched PEI. A branched PEI may be used, particularly preferably a branched PEI having an average molecular weight Mw between 600 and 1800 (by light scattering LS) and an average Mn between 400 and 1600 (by gel permeation chromatography GPC). Each molecule of PEI can have several attachment points, since several amino groups of one molecule can react with groups reactive with amino groups. The reactive groups can be provided by the support material provided in step a.

It is an advantage of the method according to the invention that a polymer support material can be obtained which is highly reproducible. Due to the amine coating, in particular PEI coating, previous steps of hydrophilizing the surface of a hydrophobic core have only minimum impact on the properties and performance of the resulting material, while still resulting in a mechanically stable and robust particle.

It is a particular advantage of the polymer support material that it can be further treated to be used as a stationary phase in anion exchange chromatography. However, the use of the particles is by no means limited to this. The particles can alternatively be used in other analytical and preparative separation methods, such as cation exchange chromatography, other adsorption chromatography methods, HILIC chromatography (hydrophilic interaction liquid chromatography), reversed phase chromatography, solid phase extraction, etc.

Hydrophilicity, capacity and selectivity are independently adjustable in such an ion exchange material. Ion exchange groups are charged groups on the polymer support material’s surface, especially charged amine or phosphine groups, in particular quaternary ammonium groups.

By varying the amount of ion exchange groups the capacity of the separation material can be adjusted and regulated. The support material is turned into a material suitable for ion exchange interaction, in particular ion exchange chromatography.

Due to the reaction with PEI, capacity and selectivity of an ion exchange material which is based on the polymer support material can be adjusted independently of each other.

In addition, due to the reaction with PEI, an ion exchanger material which is based on the polymer support material as described above avoids problematic co-elution with regard to oxohalides and certain haloacetic acids, such as DCA (dichloroacetic acid), MCA (monochloroacetic acid), MBA (monobromoacetic acid), DCA (dichloroacetic acid), DBA (dibromoacetic acid), TCA (trichloroacetic acid). In fact, a polymer support material according to the present invention can serve as a basis to produce an anion exchanger which allows for the separation of five haloacetic acids in addition to the inorganic standard ions and oxohalides, preferably by using gradient elution with KOH. To our knowledge, there is for the first time reported a column providing for baseline separation of $ClO_2$, MCA, $BrO_3$ and MBA.

Some other problems persisting in the art can also be overcome. The effect of coating a polymer particle mainly by means of 1,4-BDDGE has proven to be too dominant and selectivity towards inorganic anions therefore hard to control. These problems have been resolved by means of a support material as presently disclosed. The tendency of DCA to co-elute with chlorate (in KOH eluent, methylmorpholine(MM)-quarternised material) is remedied. Similar problems encountered when chlorite and bromate are to be separated in the presence of other functionalities (N-Methylpyrrolidone NMP, N-methyl-diethanolamine MDEA) are overcome by means of a support material as presently disclosed. The challenge of controlling the selectivity, especially for Br, $NO_3$, $ClO_3$ and DCA has been lessened.

By using the polymer support material as an ion exchange stationary phase, a high number of theoretical plates per column meter (> 50'000 TP/m) for the seven standard anions (fluoride, chloride, nitrite, bromide, nitrate, phosphate and sulphate) with high signal symmetries (asymmetry < 1.5) can be obtained. All above-mentioned ions appear baseline separated from each other in the chromatogram with a short total running time of the chromatography.

Preferably, the compound used in step c) is of Formula I

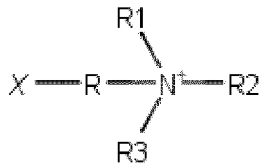

(I).

R can be a linear or branched alkyl or ether group. It is possible to provide an ether group with one or more ether moieties, preferably two ether moieties.

R1, R2 or R3 can be selected independently from the group consisting of substituted or unsubstituted alkyl, substituted or unsubstituted heteroalkyl, substituted or unsubstituted aryl, substituted or unsubstituted heteroaryl, substituted or unsubstituted heterocycloaklyl or five- or six-membered heterocycle formed between R1 and R2 or R2 and R3 or R1 and R3.

X can be a functional group reactive with amines and/or hydroxyl groups, preferably an epoxy group or halogenide. But other reactive groups are also possible, such as tosylates or mesylates.

Advantageously, the compound is of Formula I and R is selected from the linear or branched alkyl or ether group consisting of $-(CH_2)_n-$ or $-(CH_2)_n-O-(CH_2)_n-$ with n being selected from 1, 2, 3, 4, 5, 6, 7, 8, 9, 10. R1, R2 and R3 each or independently can be

- an alkyl group selected from the group consisting of $-CH_3$ and $-(CH_2)_n-CH_3$, with n being selected from 1, 2, 3, 4, 5, 6, 7, 8, 9, 10; or
- an alkyl alcohol group selected from the group of linear or branched alkyl alcohols, preferably selected from the group consisting of $-(CH_2)_n-OH$..., with n = being selected from 1, 2, 3, 4, 5, 6, 7, 8, 9, 10.

The compound can be of formula II, III or IV

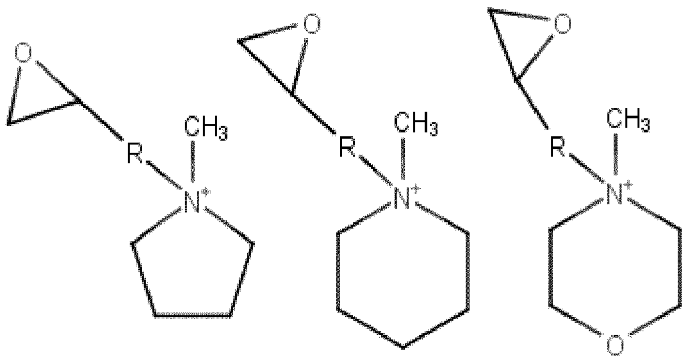

(II) (III) (IV)

with R being selected from the linear or branched alkyl or ether group consisting of $-(CH_2)_n-$ or $-(CH_2)_n-O-(CH_2)_n-$ with n being selected from 1, 2, 3, 4, 5, 6, 7, 8, 9, 10.

Preferably, the compound used in step c) is of Formula (I), selected from the group consisting of glycidyltrimethylammonium chloride; glycidylmethyldiethanolammonium chloride; and glycidyltriethylammonium chloride. Preferably, the compound used in step c) is a (Halogenoalkyl)trialkylammonium halogenide selected from the group consisting of: (3-Chloro-2-hydroxypropyl)trimethylammonium chloride, (2-Chloroethyl)trimethylammonium chloride,(2-Bromoethyl)-trimethylammonium bromide, (3-Bromopropyl)trimethylammonium bromide, (5-Bromopentyl)trimethylammonium bromide.

A crosslinking step can follow after step c) of the method. The reaction product resulting from step c) can be treated with one or more polyfunctional compounds, in particular with a compound having

- at least a first functional group reactive with amines and/or hydroxy groups, preferably an epoxy group, and
- at least a second functional group reactive with amines and/or hydroxy groups, preferably an epoxy group.

The polyfunctional compound(s) is/are preferably selected from

- epoxides, in particular 1,4-butanedioldiglycidyl ether, trimethylolpropane triglycidyl ether, poly(ethylene glycol) diglycidyl ether, resorcinol diglycidyl ether, glycerol diglycidyl ether, glycidol;
- halogenalkanes, in particular epichlorohydrin, epibromohydrin, 1,1'-Oxybis[2-(2-chloroethoxy)ethane], 1,2-Bis(2-chloroethoxy)ethane, bis(2-chloroethyl) ether, 1-Chloro-3-iodopropane, 1,4-dibromobutane, 1,3-dibromopropane;
- aldehydes, in particular glutaraldehyde.

The effect of this step shows as a significant shift of selectivity in the chromatogram obtainable by such an ion exchanger. Resolution of $Br/NO_3$ and $DCA/ClO_3$ is achieved using a polymer support material obtainable in step d as an ion exchanger material in KOH eluent.

Alternatively, the effect can also be achieved if the crosslinking step with a polyfunctional compound is replaced by treatment of the reaction product from step c) with one or more monofunctional compounds, in particular with a compound having a functional group reactive with amines and/or hydroxy groups. The monofunctional compound(s) is/are preferably selected from the group consisting of substituted or unsubstituted alkyl, substituted or unsubstituted heteroalkyl, substituted or unsubstituted aryl, substituted or unsubstituted heteroaryl, substituted or unsubstituted heterocycloaklyl and most preferably selected from halogene alkanes or epoxy alkanes, in particular iodooctan or 1,2-epoxyoctane.

The PEI can be covalently attached to the support material. Preferably the PEI is attached to the support material, which is preferably a polymeric support material, by means of a spacer molecule.

The spacer molecule can be a polyfunctional molecule with a group reactive with alcohols/amines (the substrate functionality) and the other group reactive with polyamine.

Preferably, the support material provided in step a) comprises groups that are reactive with the spacer molecule on the substrate surface.

For the purposes of this invention, a spacer molecule (or spacer) means a molecule comprising at least two functional groups as described above, and the molecule ensures a spacing of at least 3 atoms, preferably from 3 to 20 atoms, between the support material and the oligoamine or polyamine, preferably PEI. The functional groups of the spacer molecule can be functional groups which are susceptible towards a nucleophilic attack by OH-groups or amine groups, such as halogenated hydrocarbons, epoxides, tosylates, methyl sulfides or combinations thereof. The spacer atoms may be built by carbon atoms, but carbon chains may also include heteroatoms to give ether groups or thioethers. The spacer molecule creates a spacing between the support material and outer layers of polymers, monomers or modifications, e.g. ion exchange groups. Spacer molecules prevent interaction between analytes and polymer support substrate and thus reduce undesirable peak broadening in a chromatogram obtainable by means of the said polymeric support material. Spaced carbon chains with ether groups are preferred due to their higher hydrophilicity. As an example, the spacer may have glycidyl groups which are reactive with amines and/or hydroxy groups, such as 1,4-butanediol diglycidyl ether.

Preferably, the support material provided in step a) comprises groups that are reactive with epoxides, in particular hydroxyl groups.

The support material provided in step a) can be selected from the group consisting of hydrocarbon-based compounds, in particular aromatic hydrocarbon-based compounds; PVA; sugar-based compounds; inorganic compounds, in particular silica, zirconia, aluminia, titania.

In order to provide a possibility to use the prepared material in suppressed ion chromatography mode, the support particles should be compatible with high concentrations of hydroxide eluent with pH up to 14. For this reason, the most suitable support particles are aromatic divinylbenzene-based copolymers with high crosslinking degree (defined by DVB monomer content). However, high hydrophobicity of such aromatic substrates requires hydrophilization procedure to be conducted in order to achieve better column efficiency and to introduce anchor groups for the functional layer attachment. The procedure combining both aspects is disclosed in PCT/EP2020/059908.

The method can comprise the step of generating hydroxy groups on/in the support material, before step b), by a process comprising the steps of

- oxidative treatment of a polymer support substrate; and subsequent
- reductive or hydrolytic treatment.

The oxidative treatment can be a treatment with a per-acid, preferably selected from the group of meta-chloroperbenzoic acid, peroxy formic acid, peracetic acid, peroxytrifluoroacetic acid, a treatment with $KMnO_4$, a treatment with oxygen plasma or a combination thereof.

By using a per-acid, double bonds are oxidized and made accessible for subsequent reduction or hydrolysis. It goes without saying that the effect can also be achieved by other oxidative processes known to those of skill in the art, such as ozonolysis.
It is particularly preferred though that a per-acid is used because high oxygen contents can be achieved. With oxygen plasma, oxygen contents of 2.0% on the support substrate's surface can be achieved, whereas with m-CPBA, for example, oxygen contents of 3.2% and more can be achieved, measurable by elemental analysis. If a per-acid is used, it can be added to the polymer in suspension or formed *in situ* from an acid and hydrogen peroxide. Preferably, m-CPBA is added to the suspended core polymer support substrate, e.g. PS/DVB polymer substrate.

In a preferred embodiment, the reductive treatment of the reaction product is carried out by means of a reagent for the reduction of polar bonds, preferably with a metal hydride. For example, $NaBH_4$, $BH_3$, LAH, NaH, CaH can be used. The use of hydrides has the advantage that the dissolved reagent can penetrate into the pores of the particle. This is not possible with palladium on activated carbon, for example. Compared to hydrolysis with hydrochloric acid, which hydrolyses epoxides to hydroxylene, reduction with metal hydrides can also convert carbonyls and carboxyls. The reduction converts the formed oxidation products into alcohols. Lithium aluminum hydride is preferably used in to obtain diethyl ether. For example, to a 1-20% w/v polymer suspension in dry diethyl ether a 5-100% w/w of the polymer (dry) of lithium aluminum hydride may be added. Preferably, to a 5-15% w/v polymer suspension in dry di-ethyl ether a 5-20% w/w of the polymer (dry) of lithium aluminium hydride may be added. Typical temperatures range from 25 - 70°C, especially preferable is the boiling temperature of diethyl ether, and a reaction time of 1 min to 72h, especially preferably 3h to 48h.

Advantageously, the reaction product resulting after the reductive or hydrolytic treatment is pressure-stable at pressures up to 220 bar, preferably up to 250 bar, particularly preferably at pressures up to 300 bar. Pressure stability is understood here to mean that the pressure increase as a function of the flow rate is only linear. The good pressure stability results from small particle diameter size and micro-/mesoporosity of a particle structure as explained below.

The support material is preferably

- partially derived from aromatic hydrocarbon compounds having at least two vinyl or allyl substituents, preferably at least partially derived from divinylbenzene monomers; and
- partially derived from monomers selected from the group of ethylvinylbenzene, vinyl acetate, styrene and any combination thereof.

The relative amount of aromatic hydrocarbon compounds having at least two vinyl or allyl substituents, preferably the relative amount of divinylbenzene derived monomers is preferably at least 50 % by weight.

Such a support material is derived essentially completely from compounds which do not contain oxygen atoms, so that a mechanically and chemically stable particle core is obtained that is compatible with the high concentrations of hydroxide eluent present in suppressed ion chromatography.

A second aspect of the invention refers to a support material for use as a stationary phase in an analytical or preparative separation process, in particular a chromatography process, obtainable by a method as previously described.

Advantageously, the support material provided in step a) is microporous or mesoporous.

It is particularly preferred that the polymer support material as claimed is based on a polymer support substrate which is microporous or mesoporous. It is particularly preferred that the polymer support substrate is hydrophobic. By hydrophobic is meant here that the polymer support material is non-polar, i.e. has no monomer units with a dipole moment > 0.2 D. Microporous or mesoporous means here that the polymer support material has an average pore diameter of at most 50 nm, measurable by nitrogen sorption in the BJH model.

The support material is preferably present as particles, more preferably as spherical particles, particularly preferably as spherical particles having an average particle size of 1 to 50 μm, more preferably 2 to 25 μm, particularly preferably 3 to 9 μm. Particle size is defined here as an average value between the longest and shortest straight line through the centre of the particle, measurable by scanning electron microscopy (SEM) and automated image evaluation.

The size of the particles can be adjusted by suitable stirring speed, choice of solvent, concentration of the polymer in the solvent, etc. The procedures are known to the expert. A polymer support material of this shape and size

has a volume/surface area ratio which has proven to be particularly advantageous for the exchange capacity. It exhibits high diffusivity into the pores and is easy to pack.

Preferably, the polymer support material is stable in a pH range from 0 to 14, in particular such that the retention time of sulfate in a column packed thereof after one-time rinsing with 1M NaOH solution and/or one-time rinsing with 1M $HNO_3$ solution does not differ by more than 8%, preferably by more than 5%, particularly preferably by more than 3% from the retention time of sulfate before such rinsing. The measuring method for pH stability is performed as follows: The sample is packed into a chromatography column and the retention time of sulphate is determined from ten measurements with an eluent of 6 mmol/L $Na_2CO_3$ and 1 mmol/L $NaHCO_3$. The column is then rinsed for 14 h with an eluent of 6 mmol/L $Na_2CO_3$ and 1 mol/L NaOH (pH 14) at 0.8 mL/min. Then 10 more measurements of the sulphate retention time are performed with an eluent of 6 mmol/L $Na_2CO_3$ and 1 mmol/L $NaHCO_3$. The column is then flushed for 14 h with an eluent of 6 mmol/L $Na_2CO_3$ and 1 mol/L $HNO_3$ (pH 0) at 0.8 mL/min. Then 10 more measurements of the sulphate retention time are performed with an eluent of 6 mmol/L $Na_2CO_3$ and 1 mmol/L $NaHCO_3$. Each time the eluent is changed, the column is rinsed with water for 1 h to avoid precipitations. A possible change is investigated on the basis of retention time and plate numbers of sulphate; both parameters deviated by a maximum of 3% from the originally determined values after both basic and acidic treatment.

The polymer support material as previously described can derive from a polymeric support substrate which is substantially entirely composed of monomer units selected from the group of:

- monomer units derived from aromatic hydrocarbon compounds having at least two vinyl or allyl substituents, preferably derived from divinylbenzene;
- monomer units derived from ethylvinylbenzene;
- monomer units derived from styrene;
- a combination thereof.

By "substantially entirely composed of" is meant that the total proportion of the listed monomer units in the polymer support material provided in step a amounts to at least 95% by weight, preferably at least 98% by weight, particularly preferably at least 99% by weight. In other words, the monomer units can be derived essentially completely from compounds which do not contain oxygen atoms, so that a hydrophobic particle core is obtained.

The polymeric support substrate can have an average pore radius of 1 to 50 nm, preferably of 2 to 25 nm, particularly preferably 2 to 10 nm, measurable by nitrogen sorption in the BJH model. The measurement is performed as described in the examples.

Preferably, the polymeric support substrate has a specific surface area of 80 to 1000m2/g, preferably of 100 to 800 m2/g, even more preferably of 200 to 600m2/g, measurable by nitrogen sorption in the BET model. The measurement is performed as described in the examples.

The high specific surface area increases the capacity and resolution of the column, especially when separating small ions such as standard ions.

The modification of polymer support substrates to obtain a support material as provided in step a) of the method has been described in PCT/EP2020/059908, its content is included herein in their entirety by reference.

The invention is at least partially based on the idea that the material as described in PCT/EP2020/059908 can be further improved by providing a coating with an oligo- or polyamine, in particular polyethyleneimine PEI, to reduce the effect of oxygen content in support particles on selectivity and thus to simplify the control over batch to batch reproducibility of the whole modification procedure. The coating with PEI additionally shields the substrate, so the interactions with the underlying surface are reduced. At the same time, the present invention shares the advantages of PCT/EP2020/059908 such as high chemical and mechanical stability and good column performance, while providing the possibility to control selectivity and column capacity independently from each other on different modification steps.

The polymer support substrate can typically be provided as particles, preferably as spherical particles, particularly preferably as spherical particles with an average particle size (median) of 1 to 50 μm, even more preferably with an average particle size of 2 to 25 μm, particularly preferably with an average particle size of 3 to 9 μm. However, other polymer support materials are also conceivable, especially polymer support materials in the form of membranes or monoliths. By spherical is meant that the particle has a sphericity value

$$\Psi = \frac{\pi^{\frac{1}{3}} (6V_p)^{\frac{2}{3}}}{A_p}$$

of at least 0.80, preferably at least 0.90, more preferably at least 0.95, where $V_p$ is the volume of the particle and Ap is the surface area of the particle.

The oxygen content at the surface of the polymer support material can be increased by the initial oxidation and reduction or hydrolysis. Through the modification, hydroxy-groups can be originally generated on/in a core polymer support substrate that does not have a detectable oxygen content. The increased oxygen content can influence the type and characteristics of secondary interactions, especially the hydrophilicity of the resulting polymer support material. By a series of steps following the initial oxidation and reduction / hydrolysis, the capacity can be adjusted independently of the oxygen content at the surface.

The surface of the polymer support material or polymer support material surface is understood here in particular to mean the outer surface of the polymer support material structure which can be contacted by solution and the layer of 1 to 30 nm directly adjacent to this outer surface. The outer surface which can be contacted by solution can be partially located on microstructures, for example, on porous microstructures. In particular are envisaged the outer surface of polymer support substrate particles having porous or non-porous structures which can be contacted by solution.

A first contribution to chemical and mechanical stability can be made by a covalent bond between the polymer support material and a coating. This is in contrast to the use of latex-based ion exchangers, where purely electrostatic interactions provide for the position and orientation of exchange groups vis-à-vis the substrate. High chemical inertness is ensured due to covalent bonding. A second contribution to mechanical stability can be made by the fact that the core polymer support material is preferably at least partially formed from aromatic hydrocarbon compounds having at least two vinyl or allyl substituents, preferably at least partially from divinylbenzene monomers. The stability of this core polymer support substrate is not affected by any of the pre-treatment steps, such as the oxidative treatment and reductive and hydrolytic treatment. The core polymeric support substrate is preferably monodisperse.

The advantages of the high robustness of the particles become particularly apparent when a column packed with a polymer support material obtained by the above method is subjected to a pressure-flow test. In a pressure-flow test, the pressure development in the column is determined as a function of a continuously increased flow rate of mobile phase. In the column according to the invention, the pressure linearly depends on the flow rate. This is in contrast with results obtained with columns packed with conventional hydrophilic pDVB substrate having a substantial vinyl acetate content. With conventional columns the pressure increases more than linearly with an increasing flow rate. For example, a hyperbolic slope of the function can result. This is shown, for example, in a publication of Çaglayan et al. (J Sep Sci 2006, 29, 940). According to the publication, an increased amount of vinyl acetate derived monomers and thus an increased amount of OH-groups in a hydrolyzed particulate substrate leads to a strong increase in back-pressure when the column packed with such substrate is exposed to increased flow rates.

A third aspect of the invention refers to a chromatography column, in particular ion exchange chromatography column, filled with a support material as previously described.

A fourth aspect of the invention refers to a method of chromatographic separation of analytes. A solution containing the analytes is contacted with polymer support material modified as previously described, in particular is passed through a chromatography column according to one aspect of the invention.

A fifth aspect of the invention refers to the use of a polymer support material as previously described and/or obtainable by a method as previously described for the analytical or preparative separation of analytes, in particular for use in anion exchange chromatography, cation exchange chromatography and/or in HILIC chromatography. The polymer support material is particularly suitable for use in suppressed ion chromatography.

The invention will be better understood by means of the following examples. The skilled person will, however, appreciate that variations are possible and well within the scope of disclosure.

The following figures illustrate:

| | |
|---|---|
| Figure 1 | Schematic representation of substrate modification with PEI; |
| Figure 2 | Schematic representation of modification with a compound baring an ion-exchange group; |
| Figure 3 | Schematic representation of modification with a crosslinking step; |
| Figure 4 | Chromatogram obtainable with a polymer support material according to Example 6.2 in isocratic mode; |
| Figure 5 | Change in retention factor k' depending on the amount of GTMA used in Example 5.1; |
| Figure 6A, 6B | Comparative chromatograms of performance of polymer support material according to Example 5.1 and 6.1; |
| Figure 7A, 7B | Chromatograms of polymer support material according to comparative Example A in separating certain ions; |
| Figure 8A,8B | Comparative chromatograms obtainable by polymer support material according to Example 6.2 with low and high crosslinking degree of coating; |
| Figure 9 | Chromatogram obtainable by using a polymer support material according to Example 6.2 in gradient mode; |
| Figure 10: | Pressure-flow profile measured on a chromatography column filled with a polymer support material of the invention according to step a); |
| Figure 11: | Result of the particle size analysis by SEM (number over diameter [μm]). |

Example 1: Providing a polymer support substrate

Polystyrene seed particles were prepared by dispersion polymerization of styrene in ethanol, stabilized with polyvinylpyrrolidone and initiated by means of azo-bis-iso-butyro-nitrile. Polystyrene particles having a mean diameter of 1.5μm (Mn=15 kg/mol, Mw= 55 kg/mol) were thus obtained. Polymerization was continued in an emulsion of 55 wt% divinylbenzene (DVB), 45% ethylvinylbenzene (EVB), toluene, in water/isoamyl alcohol, stabilized with polyvinylalcohol and initiated by means of azo-bis iso-butyro-nitrile. Thus, porous highly crosslinked poly (DVB-EVB) particles having a mean radius of 4,6 μm, specific surface area of 540 $m^2$/g, and a porosity of 1 $cm^3$/g were obtained.

Example 1.1: Determining the average pore radius and the specific surface of the polymer support substrate

The average pore radius of the starting polymer support substrate was determined by nitrogen sorption in the BJH (Barret, Joyner, Halenda) model. The specific surface area was determined by nitrogen sorption in the BET model (Brunauer, Emmett, Teller). For both analyses a sample of 0.0945g PS/DVB polymer support substrate was used. The density of the sample material was 1.05g/cc. The measurement was performed on an Autosorb iQ S/N:14713051301 instrument in a 9 mm cell. The bath temperature was 77.35 K. The final degassing temperature was 60°C. The evaluation of the measurement was performed on Quantachrome ASiQwin version 3.01. The measurement was performed twice, once with a soaking time of 80 min, once with a soaking time of 40 min. The outgassing rate was 1.0 °C/min and 20.0 C°/min respectively. The mean pore radius resulting from the BJH method based on the pore volume was 5.060 nm. The specific surface area according to the Multi-Point BET plot was calculated to be 540.0 $m^2$/g.

Example 1.2: Determining the pressure stability of the polymer support material

An oxidation with hydrogen peroxide and a reduction with lithium aluminium hydride was carried out on the starting polymer support substrate. The resulting particle was subjected to a pressure test. For the pressure test, a 250x4mm column was packed with the particle and water was passed through the column at an increasing flow rate. Figure 10 shows a pressure-flow profile measured at room temperature. The γ-axis shows the system pressure in bar. The x-axis shows the flow rate in mL/min. 8 intervals of 30 seconds each were measured, increasing the flow rate stepwise from 0.2 ml/min to 1.6 ml/min. As can be seen in the figure, the pressure is linearly dependent from the flow rate, up to pressures of 400 bar or 40 MPa.

Example 1.3: Determining the average particle size

The circularity and average particle diameter were determined for a sample of the starting polymer support material provided in step a. The sample was applied to a scanning electron microscope carrier in a single particle layer and coated with gold using a sputter-coater of the type LOT AutomaticSputterCoater MSC1 connected to a Vacubrand RZ 6 vacuum pump. A series of 27 images was taken using a scanning electron microscope (Phenom ProX) and individual particles were identified and measured using Olympus Imaging Solutions Scandium. The identified particles were analyzed for spherical diameter and roundness. All images were analyzed in batch processing with the same threshold values and measurement settings. A total of 6039 particles were measured with a circularity of ≥0.8. The measurement results are shown in Figure 11. It shows the y-axis the number of particles and x-axis the diameter in μm. The smallest measured radii were 0.8μm, the largest up to 10μm. The mean diameter (median) was 4.59 μm, with a relative standard deviation of 6.23 %. The polydispersity index PDI (Mw/Mn) found to be 1.044.

Example 2.1: Generating hydroxy groups:

Oxidation with acetic acid: 61.7 g of the product of Example 1 were suspended in 382 mL acetic acid in a 1 L reactor connected to thermostat. Reaction mixture was heated to 80°C. 121 mL hydrogen peroxide (35%) were slowly added dropwise during 2h. The reaction mixture was stirred for 24 h, then cooled down and filtered of, washed with ultrapure water to neutral pH and flushed with ethanol. The filter cake was dried in a vacuum oven, to yield 66 g of product.

Reduction with lithium aluminium hydride: 51.7 g of the dried oxidized product were suspended in 196 mL of dry tetrahydrofuran in a 1 L reactor and cooled to 5 °C with thermostat. 92 ml of 2.4M lithium aluminium hydride solution in tetrahydrofuran were added carefully under stirring. The reaction mixture was heated to 55°C under stirring for 48 h. The reaction was stopped by cooling down to 0°C and adding 80 ml water within 60 minutes. After that the reaction mixture was diluted and 150 ml sulphuric acid was added under stirring. The reaction mixture was heated to 80°C for 1 h and filtered off afterwards. It was washed with water to neutral pH and flushed with acetone. The filter cake was dried to yield ca.50 g of product. The whole procedure was repeated twice.

Example 2.2: Generating hydroxy groups:

Oxidation with acetic acid: 41 g PS/DVB (55% DVB in EVB) were suspended in 300 mL acetic acid in a 1 L reactor with thermostat. Reaction was heated to 80°C. 79 mL of hydrogen peroxide (35%) were slowly added dropwise within 2h. The reaction mixture was stirred for 18 h, then another portion of 79 ml of hydrogen peroxide were added and the mixture was stirred for another 4h. Then the reaction mixture was cooled down, filtered off, washed with ultrapure water to neutral pH and then flushed with ethanol. The filter cake was dried in a vacuum oven, to yield 45.1 g of oxidized product.

Reduction with lithium aluminium hydride: 41.3 g of the oxidized dried product was suspended in 434 mL of dry tetrahydrofuran in a 1 L reactor and cooled to 0 °C with thermostat. 5.1 g of lithium aluminium hydride were added carefully under stirring. The reaction mixture was heated to 55°C under stirring for 20 h. The reaction was stopped by cooling down to 0°C and adding 300 ml of water within 60 minutes. Then the reaction mixture was filtered off, the residue was re-suspended, and 41.3 ml 32% hydrochloric acid were added while stirring. The reaction mixture was heated to 80°C overnight, then filtered off, washed with water to neutral pH and flushed with acetone. The filter cake was dried to yield ca.39.8 g of the product. The whole procedure was repeated twice, because the first reduction was not strong enough.

Example 3.1: Providing a linker with terminal epoxy groups

25 g of the reaction product of Example 2.1 was suspended in 93.75 mL dimethyl sulfoxide and 62.5 mL 1,4-butanediol diglycidyl ether. The flask was subjected to three vacuum/argon cycles. Under constant stirring, 37.5 mL NaOH (aq, 0.6M) were added and the reaction mixture was left under stirring for 26 h with thermostat temperature fixed at 28 °C. The product was filtered off, flushed with water and ethanol.

Example 3.2: Providing a linker with terminal epoxy groups

10 g of the reaction product of Example 2.2 was suspended in 37.5 mL dimethyl sulfoxide and 25 mL 1,4-butanediol diglycidyl ether. The flask was subjected to three vacuum/argon cycles. Under constant stirring, 25 mL NaOH (aq, 0.6M) were added and the reaction mixture was left under stirring for 22 h with thermostat temperature fixed at 28 °C. The product was filtered off, flushed with water and ethanol.

Example 4.1: Providing a PEI coating

The product of Example 3.1 (substrate) was suspended in ethanol and water mixture. Polyethyleneimine PEI (CAS 25987-06-8) was dissolved in water, stirred and subjected to ultrasonication. The suspended particles and the dissolved PEI were combined and left under stirring for 23.5 hrs at 60°C. The weight ratio of PEI to substrate used was 0.4 g per 1 g. The product was filtered off and flushed with water. A schematic representation of the synthesis is provided in Fig. 1.

Example 4.2: Providing a PEI coating

The procedure was the same as in Example 4.1, but the product of Example 3.2 was used as a substrate. A schematic representation of the synthesis is provided in Fig. 1.

Example 5.1: Introducing an ion exchange group

The worked-up product of Example 4 was suspended in ethanol/water, stirred and sonicated. Glycidyltrimethylammonium chloride (GTMA, CAS 3033-77-0) was added and the reaction mixture was left under constant stirring at 60°C for 4 hrs. The weight ratio of GTMA to substrate used was 3.2 g per 1 g. The product was filtered off and flushed with water. A schematic representation of the synthesis according to Example 5.1 is provided in Fig. 2.

Example 5.2: Introducing an ion exchange group

The procedure was the same as in Example 5.1, but the product of Example 4.2 was used as a substrate and amount of GTMA used was 0.8 g per 1 g of substrate. A schematic representation of the synthesis is provided in Fig. 2.

Example 6.1: Crosslinking

The worked-up reaction product of Example 5.1 was suspended in water. 1,4-butanediol diglycidyl ether (1,4-BDDGE, CAS 2425-79-8) was added and the mixture was kept for 2.5 h at 60°C under constant stirring. The weight ratio of 1,4-BDDGE to substrate used was 2 ml per 1 g. The product was filtered off and flushed with water. A schematic representation of the synthesis according to example 6 is provided in Fig. 3.

Example 6.2: Crosslinking

The procedure was the same as in Example 6.1, but the product of Example 5.2 was used as a substrate. A schematic representation of the synthesis is provided in Fig. 3.

Example 7: Ion chromatography

A 250x4 mm column was packed with ion exchange material obtained according to Example 6.2 and a solution of fluoride, acetate, formate, chlorite, bromate, chloride, nitrite, dichloroacetate, chlorate, bromide, nitrate was passed through the column at 20°C using 9 mM KOH as a mobile phase with a flow rate of 0.8 ml/min. Fig. 4 shows a chromatogram obtained using such column. The ions elute separately each giving rise to a distinct and narrow peak.

Example 8: Control of capacity

Capacity variation for ion-exchange material was provided by using different amounts of GTMA in the procedure according to Example 5.1. The effect of varying the amount of GTMA used (0.4 g, 0.8 g, 1.6 g, and 3.2 g) was established by measuring the retention factor k' for all inorganic analytes from Example 7 in dependence thereof. The results are shown in Figure 5. As can be seen from Fig. 5, retention of single-charged ions depends linearly on the amount of GTMA added, which allows to control the capacity of the column. At the same time, it was noted that selectivities for all prepared ion exchangers toward tested analytes (measured as retention factors of analytes divided by retention factor of chloride) were almost identical (relative standard deviation <5%) independently from capacity, which indicated that capacity has no effect on column selectivity toward inorganic anions.

Example 9: Effect of substrate and linker on selectivity

Selectivity coefficients for all analytes from Example 7 except for dichloroacetate relatively to chloride were determined using KOH as an eluent and compared for ion-exchange materials prepared according to Example 6.1 and Example 6.2. For preparing materials according to Example 6.2, the substrates obtainable by Example 3.2 when running the reaction for 16 h, 19 h, 22 h, and 23.5 h were used which provided different length and density of linkers for polyamine attachment. Selectivity coefficients for all analytes were almost identical in all cases, with relative standard deviation being less than 5%, which indicated that variations provided on the previous steps or any potential variations in the scaled-up production process in substrate modification degree and linker length and density had no significant effect on selectivity.

Example 10: Effect of crosslinking:

The crosslinking step (see Example 6.1) has been described earlier as beneficial to the performance of an ion exchanger based on material according to the invention. A comparative study of a separation column (250x4) packed with ion exchanger material obtainable in Example 5.1 and in Example 6.1 respectively was performed. The analytes were fluoride, acetate, formate, chlorite, bromate, chloride, nitrite, dichloroacetate (DCA), chlorate, bromide, nitrate (KOH eluent, 40 mM, 1.0 ml/min). Fig 6A shows a chromatogram obtainable by using the material according to Example 5.1. Fig 6B shows a chromatogram obtainable by using the polymeric support material according to Example 6.1. Crosslinking allows for separate and distinct elution of DCA/chlorate and bromide/nitrate pairs.

Comparative Example A:

A polymeric support material was prepared according to the teachings of Example 4 of EP 3 721 998 A1, except having replaced N-Methylpyrrolidine by N-Methylmorpholine in equal amount. Fig 7A shows a chromatogram obtainable by using the material according to comparative Example A using KOH eluent. Fig 7B shows a chromatogram obtainable by using the polymeric support material according to comparative Example A in the presence of other functionalities (NMP, MDEA). As can be seen from the figures, there is often co-elution of different ions of interest when using a polymeric support material according to comparative Example A.

Example 11: Selectivity control:

The crosslinking step (see Example 6.2) has been described earlier as beneficial to the performance of an ion exchanger based on material according to the invention. A low degree of crosslinking requires using the polymer support material in gradient elution mode because of the late elution of multiple-charged anions. A high degree of crosslinking allows for using the polymer support material in isocratic elution mode. Therefore, this step is responsible for control of column selectivity. A comparative study of a separator column (250x4) packed with ion exchanger material obtainable according to Example 6.2 with a high degree of crosslinking guaranteed by long reaction time (25 h) and with a low degree of crosslinking obtained by short reaction time (2.5 h) was performed. The analytes were fluoride, acetate/glycolate, formate, chlorite, bromate, chloride, nitrite, dichloroacetate, chlorate, bromide, nitrate, sulphate and phosphate, KOH was used as an eluent. Fig 8A shows a chromatogram obtainable by using a polymer support material with low crosslinking degree of coating while using gradient elution (increasing KOH concentration during analysis). Fig. 8B shows a chromatogram obtainable by using a polymer support material with high crosslinking degree while using isocratic elution. Both chromatograms allow for clear and distinct separation of the analyte ions of interest, but material with high crosslinking degree allows for faster elution of polyvalent anions and does not require the use of gradient.

Example 12: Effect of batch variation

Three different batches of polymer support material according to Example 6.1 were synthetized. Three Columns (250x4mm) were packed and mixture of analytes described in Example 7 was separated using KOH as an eluent in suppressed ion chromatography mode. Relative standard deviation (R.S.D) for retention times of all analytes was less than 5 %, which indicates excellent batch-to-batch reproducibility of material.

Example 13: Separation of inorganic standard ions and haloacetic acids

A polymer support material according to the present invention can serve as a basis to produce an anion exchanger which allows for the separation of 5 haloacetic acids in addition to the inorganic standard ions and oxohalides, preferably by using gradient elution with KOH. Fig. 9 shows a chromatogram obtainable by using a polymer support material according to Example 6.2. A separation column (250x4) packed with such ion exchanger material was prepared and an analyte solution comprising inorganic standard ions (F, Cl, $ClO_2$, $ClO_3$, Br, $BrO_3$, $NO_2$, $NO_3$, $PO_4$, $SO_4$) as well as acetate, formate, and five haloacetic acids (MCA, MBA, DCA, DBA, and TCA) was passed with KOH as an eluent through the said separation column (suppressed ion chromatography mode) using gradient elution mode. As can be seen from Fig. 9, all analytes elute separately, giving distinct narrow peaks.

## Claims

1. Method for modifying a support material, in particular a polymeric support material, for use as a stationary phase in an analytical or preparative separation process, comprising the steps:

   a) providing a support material,
   b) coating the support material with an oligoamine or polyamine
   c) reacting the support material with a compound comprising

      - a first functional group reactive with amines and/or hydroxy groups, preferably an epoxy group, and
      - an ion-exchange group, preferably a quaternary organo-element of main group V, preferably a quaternary ammonium group,

   wherein step b) and c) are performed in sequence or simultaneously.

2. Method according to claim 1, wherein the compound used in step c) is of Formula I

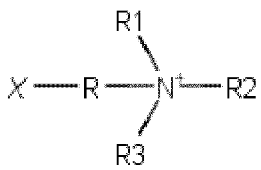

(I)

with R being a linear or branched alkyl or ether group; with each of R1, R2 or R3 being selected independently from the group consisting of substituted or unsubstituted alkyl, substituted or unsubstituted heteroalkyl, substituted or unsubstituted aryl, substituted or unsubstituted heteroaryl, substituted or unsubstituted heterocycloaklyl or five- or six-membered heterocycle formed between R1 and R2 or R2 and R3 or R1 and R3 and
with X being the functional group reactive with amines and/or hydroxyl groups, preferably an epoxy group or halogenide.

**3.** Method according to claim 2, wherein the compound is of formula I and R is selected from the linear or branched alkyl or ether group consisting of $-(CH_2)_n-$ or $-(CH_2)_n-O-(CH_2)_n-$ with n being selected from 1, 2, 3, 4, 5, 6, 7, 8, 9, 10;and wherein R1, R2 and R3 each or independently being

- an alkyl group selected from the group consisting of $-CH_3$ and $-(CH_2)_n-CH_3$, with n being selected from 1, 2, 3, 4, 5, 6, 7, 8, 9, 10; or
- an alkyl alcohol group selected from the group of linear or branched alkyl alcohols, preferably selected from the group consisting of $-(CH_2)_n-OH$, with n = being selected from 1, 2, 3, 4, 5, 6, 7, 8, 9, 10,

**4.** Method according to claim 2, wherein the compound is of formula II, III or IV

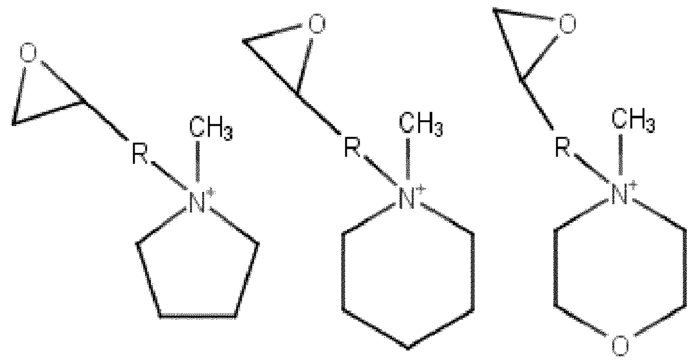

(II) (III) (IV)

with R being selected from the linear or branched alkyl or ether group consisting of $-(CH_2)_n-$ or $-(CH_2)_n-O-(CH_2)_n-$ with n being selected from 1, 2, 3, 4, 5, 6, 7, 8, 9, 10.

**5.** Method according to claim 2, wherein the compound used in step c) is of Formula (I), selected from the group consisting of glycidyltrimethylammonium chloride; glycidylmethyldiethanolammonium chloride; and glycidyltriethylammonium chloride.

**6.** Method according to claim 2, wherein the compound used in step c) is a (Halogenoalkyl)trialkylammonium halogenide selected from the group consisting of:

(3-Chloro-2-hydroxypropyl)trimethylammonium chloride,
(2-Chloroethyl)trimethylammonium chloride,
(2-Bromoethyl)trimethylammonium bromide,
(3-Bromopropyl)trimethylammonium bromide,
(5-Bromopentyl)trimethylammonium bromide.

**7.** Method according to any one of the preceding claims, wherein the support material provided in step a) is coated with a polyamine selected from the group consisting of polyallylamine, linear or branched polyethyleneimine (PEI), poly(2-methylaziridine); preferably a branched PEI.

**8.** Method according to any one of the preceding claims, wherein step c) is followed by a crosslinking step, wherein the reaction product resulting from step c) is treated with one or more polyfunctional compounds, in particular with a compound having

- at least a first functional group reactive with amines and/or hydroxy groups, preferably an epoxy group, and

- at least a second functional group reactive with amines and/or hydroxy groups, preferably an epoxy group;

wherein the polyfunctional compound(s) is/are preferably selected from

- epoxides, in particular 1,4-butanedioldiglycidyl ether, trimethylolpropane triglycidyl ether, poly(ethylene glycol) diglycidyl ether, resorcinol diglycidyl ether, glycerol diglycidyl ether, glycidol;
- halogenalkanes, in particular epichlorohydrin, epibromohydrin, 1,1'-Oxybis[2-(2-chloroethoxy)ethane], 1,2-Bis(2-chloroethoxy)ethane, bis(2-chloroethyl) ether, 1-Chloro-3-iodopropane, 1,4-dibromobutane, 1,3-dibromopropane;
- aldehydes, in particular glutaraldehyde.

**9.** Method according to any one of claims 1 to 7, wherein step c) is followed by a crosslinking step, wherein the reaction product resulting from step c) is treated with one or more monofunctional compounds, in particular with a compound having a functional group reactive with amines and/or hydroxy groups, wherein the monofunctional compound(s) is/are preferably selected from the group consisting of substituted or unsubstituted alkyl, substituted or unsubstituted heteroalkyl, substituted or unsubstituted aryl, substituted or unsubstituted heteroaryl, substituted or unsubstituted heterocycloaklyl and most preferably is selected from halogene alkanes or epoxy alkanes, in particular iodooctan or 1,2-epoxyoctane.

**10.** Method according to claim 7, wherein the PEI is covalently attached to the support material, preferably the PEI is attached to the support material, which is preferably a polymeric support material, by means of a spacer molecule.

**11.** Method according to claim 10, wherein the spacer is a polyfunctional molecule with a group reactive with alcohols/amines (the substrate functionality) and the other group reactive with polyamine.

**12.** Method according to claim 11, wherein the support material provided in step a) comprises groups that are reactive with the spacer molecule on the substrate end.

**13.** Method according to any of the preceding claims, wherein the support material provided in step a) comprises groups that are reactive with epoxides, in particular hydroxyl groups.

**14.** Method according to any one of the preceding claims, wherein the support material provided in step a) is selected from the group consisting of hydrocarbon-based compounds, in particular aromatic hydrocarbon-based compounds; PVA; sugar-based compounds; inorganic compounds, in particular silica, zirconia, aluminia, titania.

**15.** Method according to any one of the preceding claims, comprising the step of generating hydroxy groups on/in the support material, before step b), by a process comprising the steps of

- oxidative treatment of the polymer support substrate; and subsequent
- reductive or hydrolytic treatment.

**16.** Method according to any one of the preceding claims, **characterized in that** the support material is

- partially derived from aromatic hydrocarbon compounds having at least two vinyl or allyl substituents, preferably at least partially derived from divinylbenzene monomers; and
- partially derived from monomers selected from the group of ethylvinylbenzene, vinyl acetate, styrene and any combination thereof;

wherein the relative amount of aromatic hydrocarbon compounds having at least two vinyl or allyl substituents, preferably the relative amount of divinylbenzene derived monomers is preferably at least 50 % by weight.

**17.** Support material for use as a stationary phase in an analytical or preparative separation process, in particular a chromatography process, obtainable by a method according to any one of the preceding claims.

**18.** Support material according to claim 17, wherein the support material provided in step a) is microporous or mesoporous.

**19.** Polymer support material according to any one of claims 17 or 18, wherein the material is stable in a pH range from

0 to 14, in particular such that the retention time of sulfate in a column packed thereof after one-time rinsing with 1M NaOH solution and/or one-time rinsing with 1M $HNO_3$ solution does not differ by more than 8%, preferably by more than 5%, particularly preferably by more than 3% from the retention time of sulfate before such rinsing.

**20.** Chromatography column, in particular ion exchange chromatography column, filled with a support material according to any one of claims 17 to 19.

**21.** Method of chromatographic separation of analytes, **characterized in that** a solution containing the analytes is contacted with polymer support material according to any one of claims 17 to 19, in particular is passed through a chromatography column according to claim 20.

**22.** Use of a polymer support material according to any one of claims 17 to 19 and/or obtainable by a method according to any one of claims 1 to 16 for the analytical or preparative separation of analytes, in particular for use in anion exchange chromatography, cation exchange chromatography and/or in HILIC chromatography.

BDDGE layer

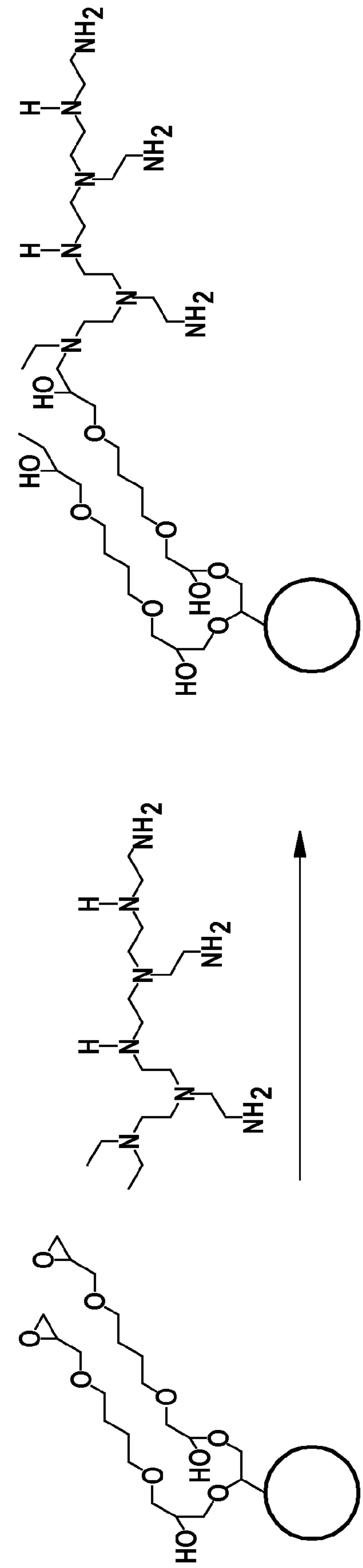

Fig. 1

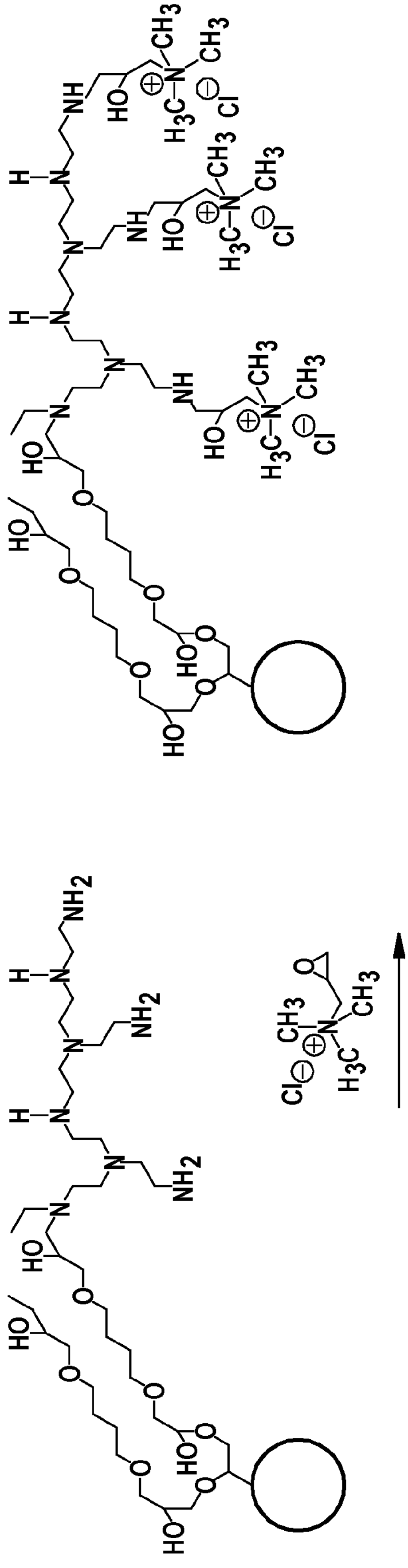

Fig. 2

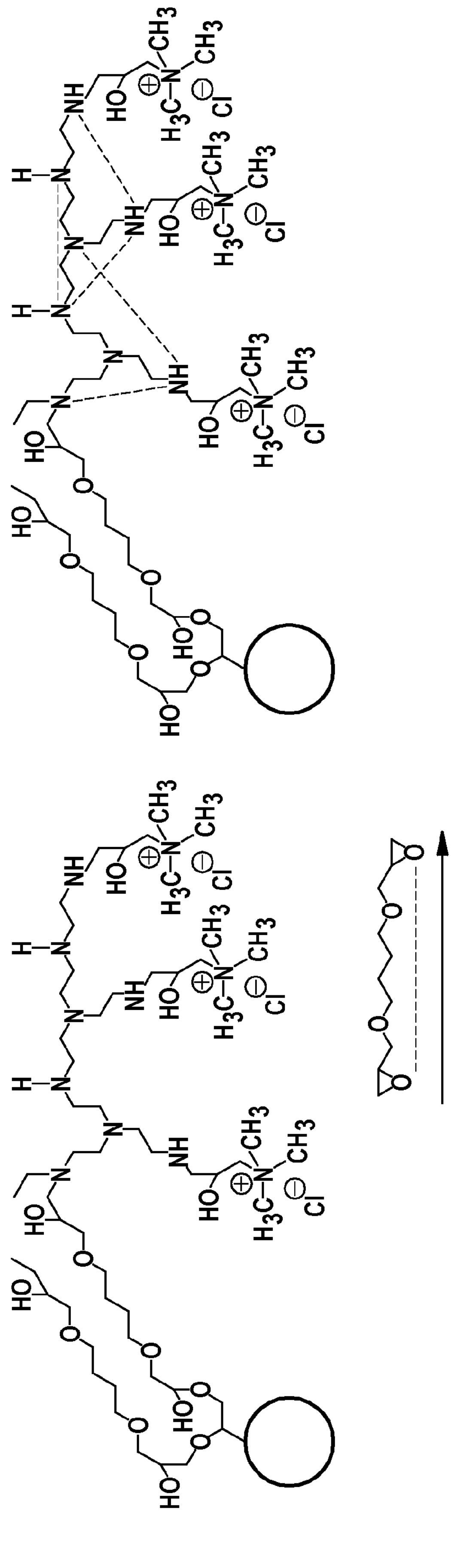

Fig. 3

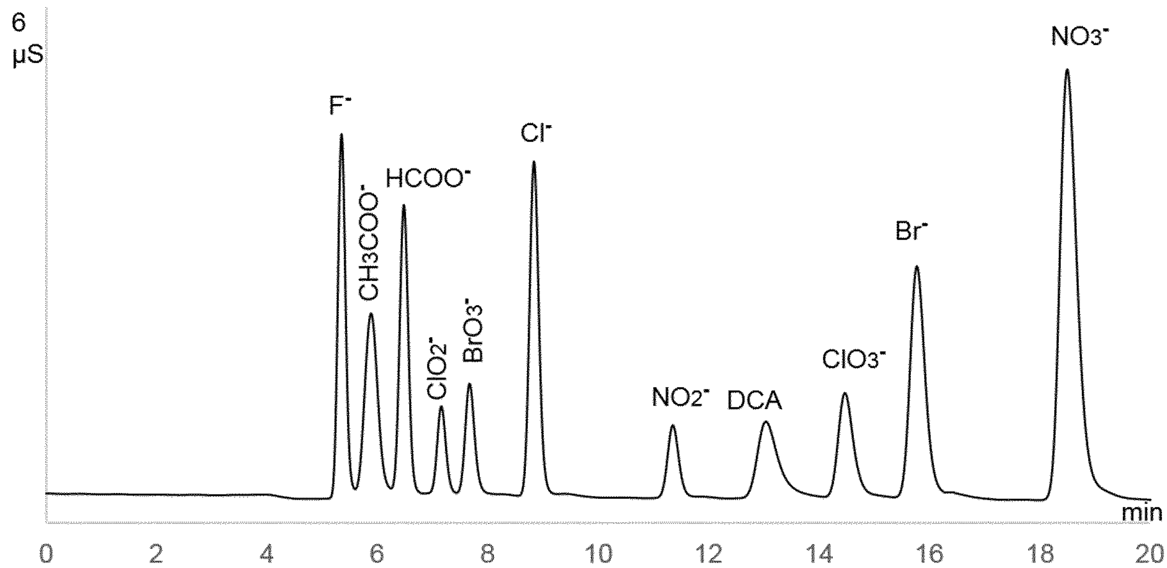
6
µS
F-
CH3COO-
HCOO-
ClO2-
BrO3-
Cl-
NO2-
DCA
ClO3-
Br-
NO3-
min
0
2
4
6
8
10
12
14
16
18
20

Fig 4

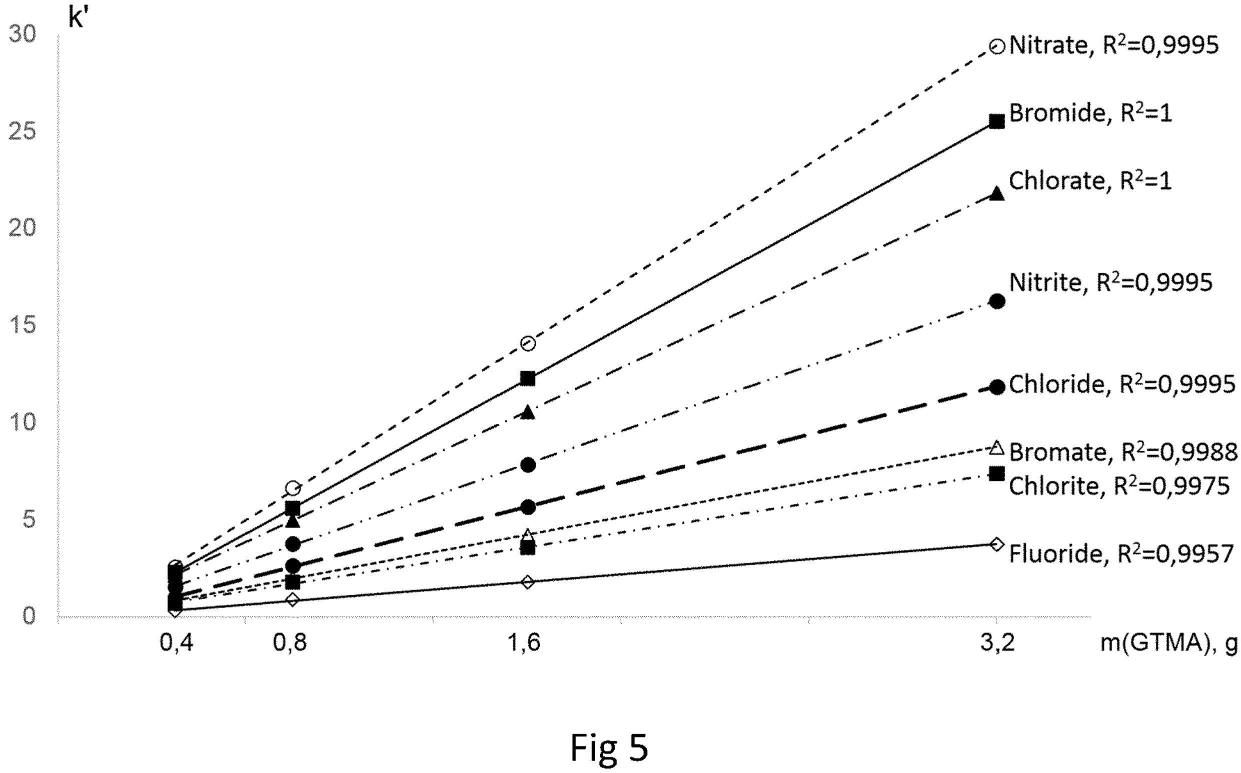
k'
30
25
20
15
10
5
0
Nitrate, R2=0,9995
Bromide, R2=1
Chlorate, R2=1
Nitrite, R2=0,9995
Chloride, R2=0,9995
Bromate, R2=0,9988
Chlorite, R2=0,9975
Fluoride, R2=0,9957
0,4
0,8
1,6
3,2
m(GTMA), g

Fig 5

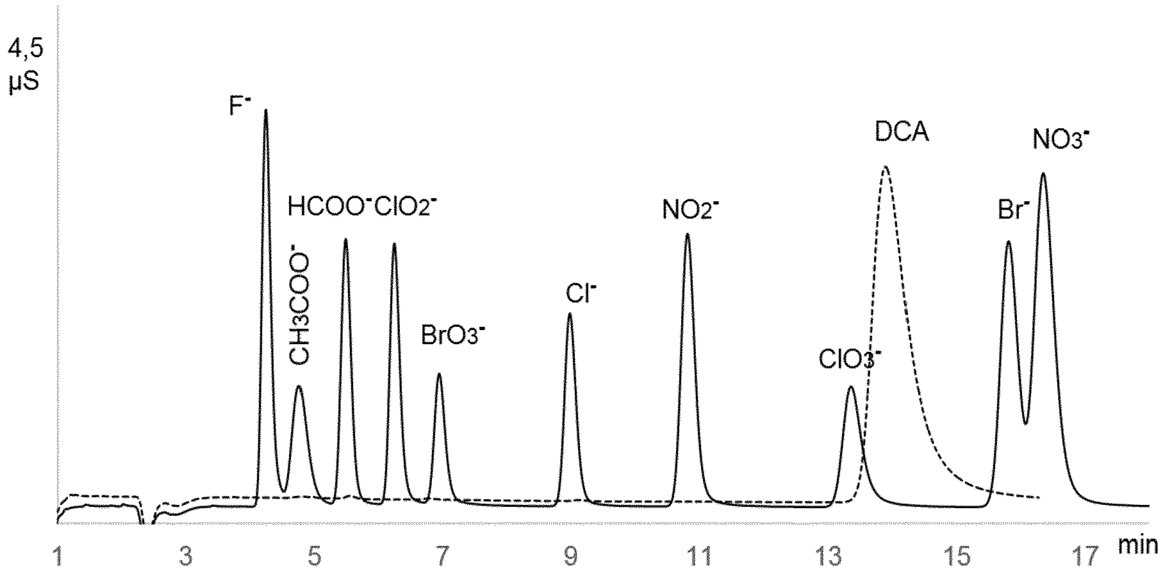
4,5
µS
F⁻
HCOO⁻
ClO2⁻
CH3COO⁻
BrO3⁻
Cl⁻
NO2⁻
ClO3⁻
DCA
Br⁻
NO3⁻
1
3
5
7
9
11
13
15
17
min

Fig 6A

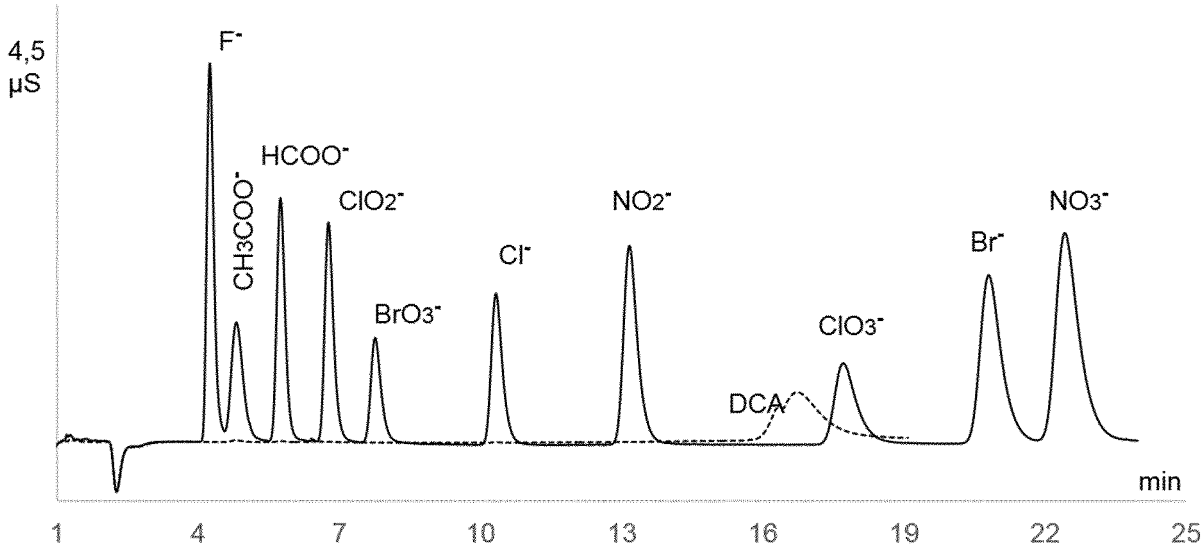
4,5
µS
F⁻
CH3COO⁻
HCOO⁻
ClO2⁻
BrO3⁻
Cl⁻
NO2⁻
DCA
ClO3⁻
Br⁻
NO3⁻
min
1
4
7
10
13
16
19
22
25

Fig 6B

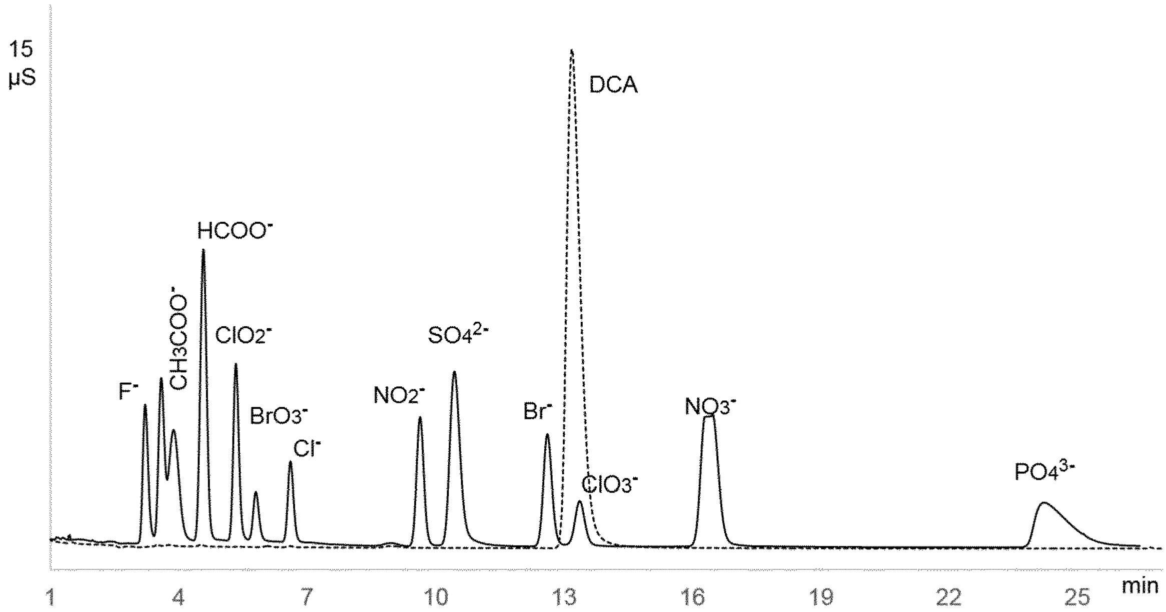
15
µS
DCA
HCOO-
CH3COO-
ClO2-
SO4 2-
F-
BrO3-
NO2-
Br-
NO3-
Cl-
ClO3-
PO4 3-
1
4
7
10
13
16
19
22
25
min

Fig 7A

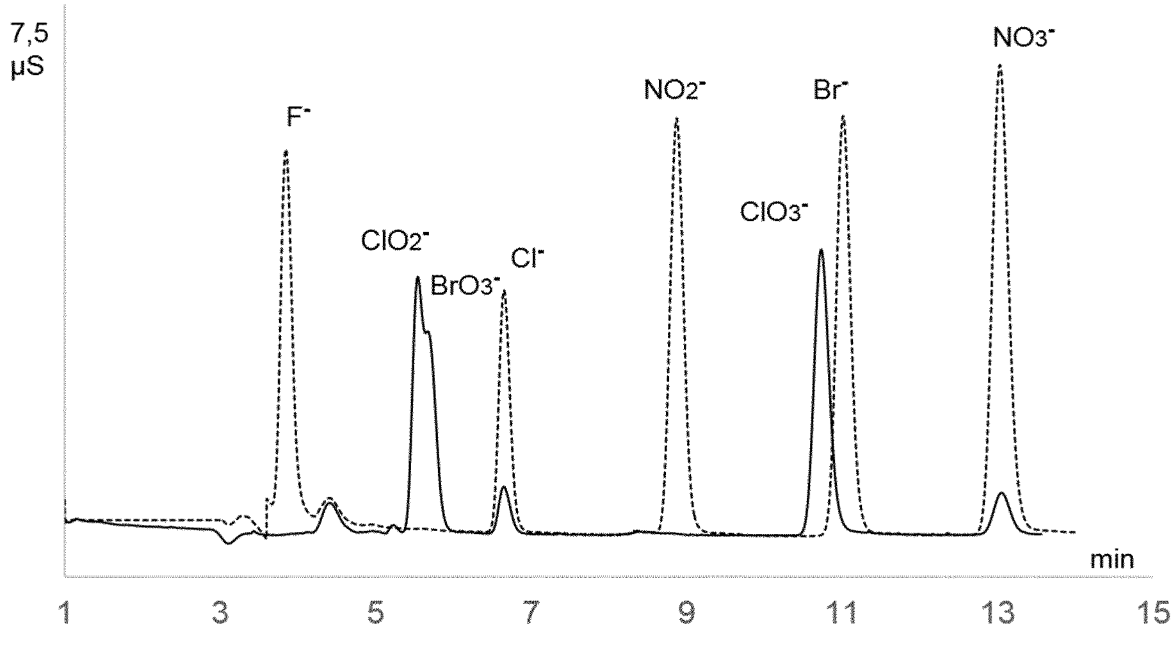
7,5
µS
NO3-
NO2-
Br-
F-
ClO3-
ClO2-
Cl-
BrO3-
min
1
3
5
7
9
11
13
15

Fig 7B

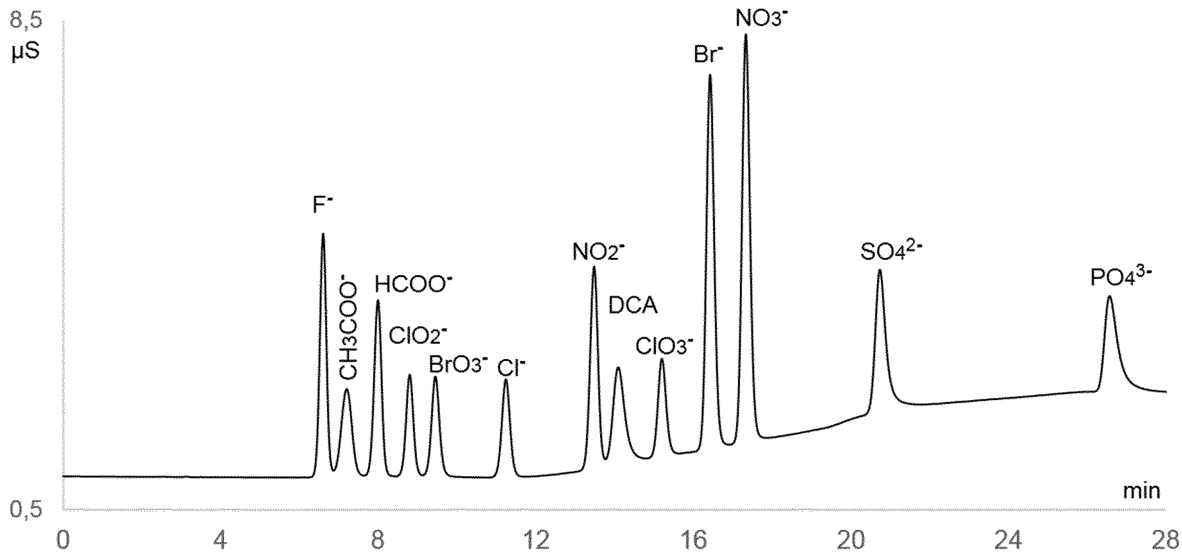
8,5
µS
0,5
F-
CH3COO-
HCOO-
ClO2-
BrO3-
Cl-
NO2-
DCA
ClO3-
Br-
NO3-
SO42-
PO43-
min
0
4
8
12
16
20
24
28

Fig 8A

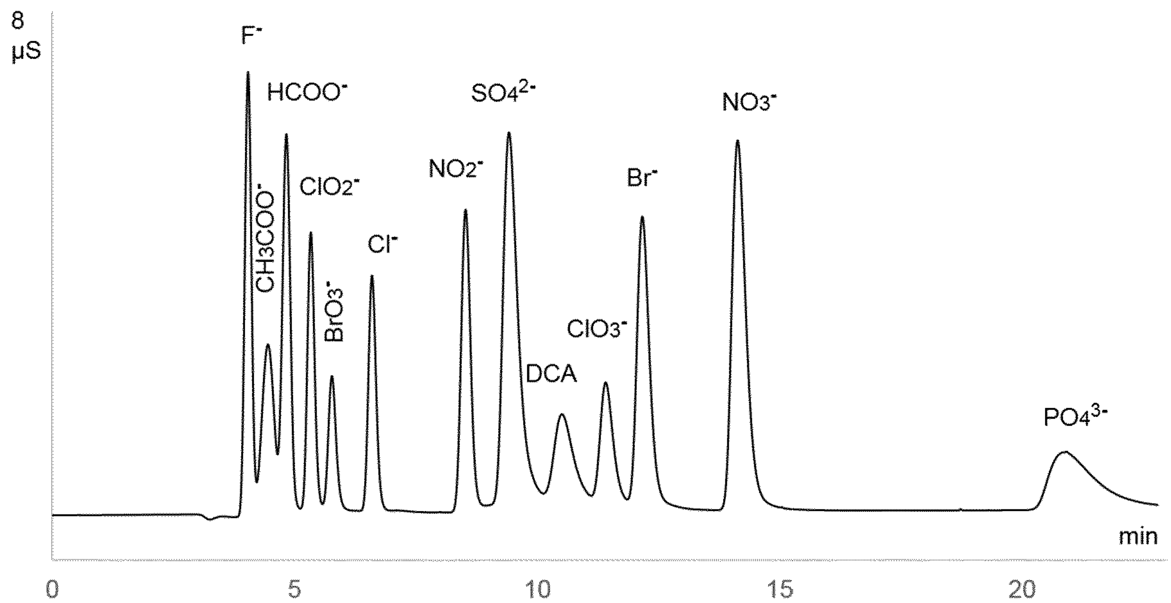
8
µS
F-
CH3COO-
HCOO-
ClO2-
BrO3-
Cl-
NO2-
SO42-
DCA
ClO3-
Br-
NO3-
PO43-
min
0
5
10
15
20

Fig 8B

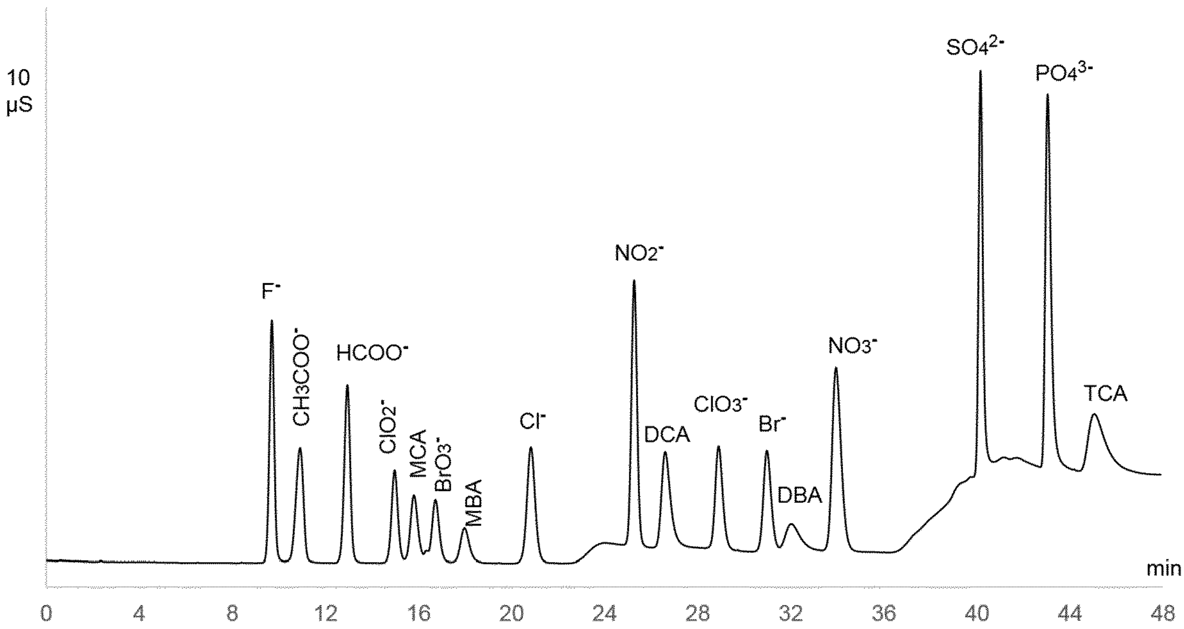
10
µS
F⁻
CH3COO⁻
HCOO⁻
ClO2⁻
MCA
BrO3⁻
MBA
Cl⁻
NO2⁻
DCA
ClO3⁻
Br⁻
DBA
NO3⁻
SO4²⁻
PO4³⁻
TCA
min
0
4
8
12
16
20
24
28
32
36
40
44
48

Fig 9

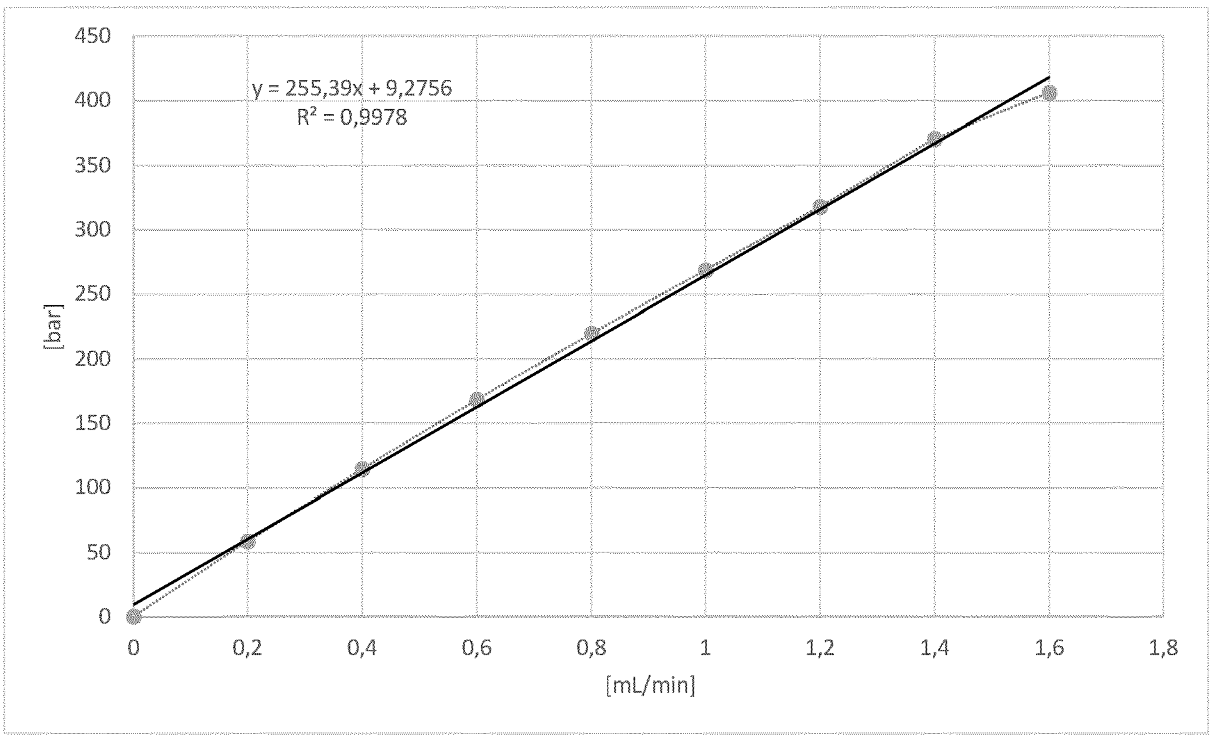
y = 255,39x + 9,2756
R² = 0,9978
[bar]
450
400
350
300
250
200
150
100
50
0
0
0,2
0,4
0,6
0,8
1
1,2
1,4
1,6
1,8
[mL/min]

Fig 10

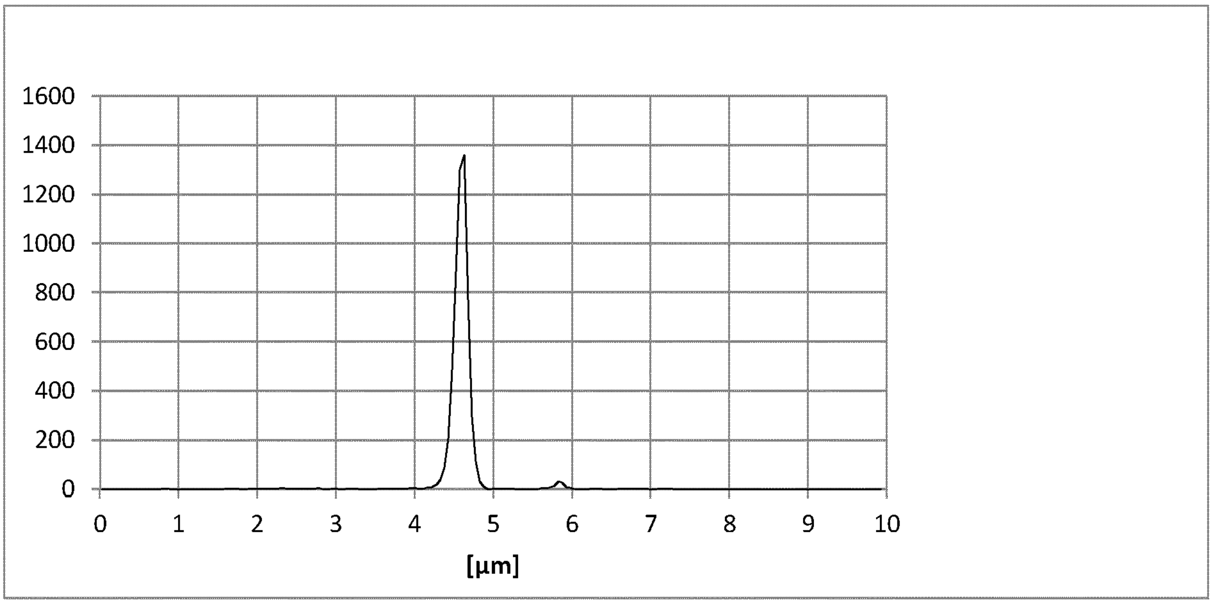


Fig 11

Europäisches Patentamt
European Patent Office
Office européen des brevets

# EUROPEAN SEARCH REPORT

Application Number
EP 20 21 6627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/203029 A1 (DEORKAR NANDU [US] ET AL) 28 August 2008 (2008-08-28) | 1-4,6,7, 9,13,14, 16,17, 20-22 | INV. B01J20/32 B01J41/13 B01J41/20 |
| Y | * page 2, paragraphs 19,20-25, 26 * * page 3, paragraphs 32, 33; example 1 * * page 5; example 25 * * page 2, right-hand column, lines 14-16,21-23 * * page 6; examples 29,30 * * page 7, paragraph 81; examples 25,29,30 * ----- | 11,12,15 | |
| X | EP 2 060 316 A1 (MILLIPORE CORP [US]) 20 May 2009 (2009-05-20) | 1-4,6,7, 9,14,17, 18,21,22 | |
| Y | * column 5, lines 57-58, paragraphs 18, 19 * * column 6, lines 5-16, 27, 56-57 * * column 6, paragraph 22 * * column 7, lines 3-6,21-35,31-37, 51-54,56-57 * * column 4, lines 37-49 * ----- | 10-13 | TECHNICAL FIELDS SEARCHED (IPC) B01J |
| X | CN 105 396 628 A (HANGZHOU FEISHANHAO TECH CO LTD) 16 March 2016 (2016-03-16) | 1-5,9, 14,16, 17,20-22 | |
| Y | * the whole document * ----- -/-- | 15 | |

The present search report has been drawn up for all claims

1

| Place of search | Date of completion of the search | Examiner |
|---|---|---|
| The Hague | 7 June 2021 | Hilgenga, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 21 6627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 6 780 327 B1 (WU XIAOSONG [US] ET AL) 24 August 2004 (2004-08-24)<br>* column 4, lines 21-27 *<br>* column 5, lines 22-26 *<br>* column 18; examples 10 , 11 *<br>* column 17; examples 7, 9 *<br>* column 12, lines 30-38, 42; claims 49, 56 *<br>* column 9, lines 41-48 *<br>* column 8, lines 57, 59 *<br>----- | 1-9,14, 17-22<br>10-13 | |
| Y | US 2002/194901 A1 (KOTSUKA TAKASHI [JP] ET AL) 26 December 2002 (2002-12-26)<br>* page 6, paragraphs 73, 76, 79 *<br>----- | 10-13 | |
| Y,D | WO 2020/208026 A1 (PHILIPPS UNIV MARBURG [DE]) 15 October 2020 (2020-10-15)<br>* page 4, line 33 - page 5, line 1 *<br>* page 5, lines 13-22 *<br>----- | 15 | |
| | | | TECHNICAL FIELDS SEARCHED (IPC) |

The present search report has been drawn up for all claims

1

| Place of search | Date of completion of the search | Examiner |
|---|---|---|
| The Hague | 7 June 2021 | Hilgenga, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 21 6627

This annex lists the patent family members relating to the patent documents cited in the above-mentioned European search report. The members are as contained in the European Patent Office EDP file on
The European Patent Office is in no way liable for these particulars which are merely given for the purpose of information.

07-06-2021

| Patent document cited in search report | Publication date | Patent family member(s) | Publication date |
|---|---|---|---|
| US 2008203029 A1 | 28-08-2008 | AT 444119 T | 15-10-2009 |
| | | AU 2005325711 A1 | 03-08-2006 |
| | | BR PI0519950 A2 | 10-03-2009 |
| | | CA 2595735 A1 | 03-08-2006 |
| | | CN 101146609 A | 19-03-2008 |
| | | DK 1841527 T3 | 07-12-2009 |
| | | EP 1841527 A2 | 10-10-2007 |
| | | ES 2332008 T3 | 22-01-2010 |
| | | IL 184761 A | 30-11-2011 |
| | | JP 5094417 B2 | 12-12-2012 |
| | | JP 2008528966 A | 31-07-2008 |
| | | KR 20070102685 A | 19-10-2007 |
| | | MY 144940 A | 30-11-2011 |
| | | NZ 556639 A | 29-01-2010 |
| | | PL 1841527 T3 | 26-02-2010 |
| | | PT 1841527 E | 20-11-2009 |
| | | TW I398453 B | 11-06-2013 |
| | | US 2008203029 A1 | 28-08-2008 |
| | | US 2014194543 A1 | 10-07-2014 |
| | | WO 2006081002 A2 | 03-08-2006 |
| EP 2060316 A1 | 20-05-2009 | AT 552043 T | 15-04-2012 |
| | | CN 101474552 A | 08-07-2009 |
| | | EP 2060316 A1 | 20-05-2009 |
| | | ES 2384479 T3 | 05-07-2012 |
| | | JP 2009125071 A | 11-06-2009 |
| | | JP 2013051970 A | 21-03-2013 |
| | | SG 152982 A1 | 29-06-2009 |
| | | US 2009130738 A1 | 21-05-2009 |
| | | US 2010323430 A1 | 23-12-2010 |
| CN 105396628 A | 16-03-2016 | NONE | |
| US 6780327 B1 | 24-08-2004 | US 6780327 B1 | 24-08-2004 |
| | | US 2004251193 A1 | 16-12-2004 |
| | | US 2005211621 A1 | 29-09-2005 |
| | | US 2006249445 A1 | 09-11-2006 |
| | | US 2007207493 A1 | 06-09-2007 |
| US 2002194901 A1 | 26-12-2002 | NONE | |
| WO 2020208026 A1 | 15-10-2020 | EP 3721998 A1 | 14-10-2020 |
| | | WO 2020208026 A1 | 15-10-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020044813 A1
- US 20050181224 A1
- EP 2020059908 W
- EP 3721998 A1


### Non-patent literature cited in the description


- *Analytica Chimica Acta,* 2017, vol. 964, 187
- *Journal of Chromatography A,* 2008, vol. 1213, 37
- **ÇAGLAYAN et al.** *J Sep Sci,* 2006, vol. 29, 940